(19) **Europäisches Patentamt / European Patent Office / Office européen des brevets**

(11) **EP 3 309 753 A1**

(12) # EUROPEAN PATENT APPLICATION

(43) Date of publication:
**18.04.2018 Bulletin 2018/16**

(51) Int Cl.:
***G06T 11/20*** (2006.01)

(21) Application number: **16193952.5**

(22) Date of filing: **14.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mettler-Toledo, LLC Columbus OH 43240-2020 (US)**

(72) Inventor: **SCHAUB, Falk 65558 Burgschwalbach (DE)**

(74) Representative: **Mettler-Toledo IP Department Im Langacher 44 8606 Greifensee (CH)**

(54) **DISPLAY OF MEASUREMENT RESULTS IN A CONTINUOUSLY UPDATED TIME GRAPH**

(57) A result display on a display panel of a measuring instrument is configured as a dynamically updating time graph (11, 21) with an abscissa (12, 22) carrying scale markings representing points in time, an ordinate axis (13, 23) carrying scale markings representing measurement values acquired through measurement events taking place in the measuring instrument, and an origin at the intersection of the abscissa (12, 22) with the ordinate axis (13, 23). The origin represents a momentary present point in time from which the abscissa axis (12, 22) extends in one direction towards increasingly distant past points in time. The time graph is continuously updated so that the measurement value at the origin represents a momentary and continuously updated present measurement value, while the past measurement values represented by the points on the graph continuously shift their positions along the abscissa (12, 22) in the direction towards increasingly distant past points in time. This dynamic graphic display is distinguished by the fact that the time scale that is represented by the scale markings along the abscissa (12, 22) shows an increasing compression, i.e. an increasing ratio of incremental length of time $\Delta t$ per incremental distance $\Delta x$ from the origin in the direction towards increasingly distant past points in time.

Figure 2

EP 3 309 753 A1

**Description**

The present invention concerns a way of graphically displaying a time series of discrete measurement results or a dynamically variable measurement result of a quantity that varies over time in the form of a graph on a display screen of a measuring or testing instrument.

Display screens in which measurement results are represented in the form of time graphs have been used for a number of years in product or vision inspection systems, such as X-ray inspection systems made by the applicant. In these inspection systems, a conveyor belt may carry a product such as for example ground meat, either in separate individual packages or as a continuous product stream, through an X-ray scanner. Advanced state-of-the-art X-ray inspection systems made by the applicant use the principle of dual energy X-ray absorptiometry (DEXA) which provides the capability to determine fat, protein, moisture, or chemical lean content and to measure mass as well as detect contaminants in the products moving through the scanner. The measurement result, for example fat content, is presented on a display screen as a continuous live time graph in which the abscissa represents the time axis and the ordinate represents the measurement value. The origin of the time axis (i.e. the intersection of the time axis with the ordinate axis) represents the momentarily present point in time, and the measurement value on the ordinate axis represents the value of a measurement taking place at the present point in time. With each update cycle of the inspection system, the origin corresponds to the new present point in time with a new present measurement value. The preceding measurement point, as well as the entire time graph, moves from the momentary present (the origin of the coordinate system) into the past.

The movement of the graph from the present into the past may be visualized by orienting the time axis from the origin to the left, as the past is intuitively associated with negative time values. The continuously updating time graph can thus be compared to the image seen out of the window of a moving train, wherein the window frame represents the coordinate system. An illustrative example of a dynamically updating time graph of this type can be found on any Windows® computer by activating the "Task Manager" feature and selecting "Performance".

Time graphs displayed on computer screens often have selectable time spans. For example in the case of the aforementioned X-ray inspection system, the time graph can be selectively switched to cover 5 minutes, 15 minutes, 30 minutes, or 1 hour. Due to the physical nature of a screen image as a raster grid of discrete image dots (pixels), if the individual measurement events follow each other faster than the time interval represented by the distance between adjacent raster dot columns, a time graph can obviously not show each individual value. A display with a selection of different time spans is therefore designed so that at least in the graph with the shortest time span the time interval represented by the distance between adjacent raster dot columns is shorter than the time period between the successive measurements that are to be represented in the graph, whereby each individual value can be shown. In the graphs with longer time spans, the distance between adjacent raster dot columns will generally represent a time interval that is longer than the time period between the successive measurements, so that more than one measurement event will fall within the time interval represented by the distance between adjacent raster dot columns. In this case, the measurement value shown as a point of the time graph represents the average of the measurement values falling within the time interval corresponding to the raster column width. The process of dividing a series of individual data into groups and representing the groups by their respective averages is also referred to as "data binning". Data binning is a concept that is generally practiced in the field of statistics and also belongs to the known state of the art in the design of pixel graphs.

A critical drawback of the state-of-the-art time graph displays described above was found to be the need to use different graphs to cover different time spans. In these conventional displays, to provide a view of the measurement result history for different time frames with different display resolutions, one has to either switch between different views for different time spans, or a plurality of time graphs for different time spans are displayed simultaneously, which obviously necessitates a commensurately larger display screen.

It is therefore the object of the present invention to provide a dynamically updating screen display in which the most recent short-term history of the results of a measurement series in progress as well as the long-term history that lies farther in the past can be shown in a single time graph while offering at least as much information to the viewer as the conventional solutions that use different time graphs for different time frames.

This task is solved by a result display on a display panel of a measuring instrument in the form of a time graph with the features of claim 1. Further preferred embodiments of the invention are set forth in the dependent claims.

A result display on a display panel of a measuring instrument is configured as a dynamically updating time graph with an abscissa or time axis carrying scale markings representing points in time, an ordinate axis carrying scale markings representing measurement values acquired through measurement events taking place in the measuring instrument, and an origin at the intersection of the abcissa with the ordinate axis, wherein the origin represents a momentary present point in time from which the abscissa axis extends in one direction towards increasingly distant past points in time. The time graph is continuously updated so that the measurement value at the origin always represents the momentary present measurement value, that the successive points of the graph represent increasingly older past measurement values and that, consequently, the points on the graph continuously shift their positions along the abscissa in the direction towards increasingly distant past points in time. As a distinguishing feature of the invention, the time scale that is indicated by the scale markings along the abscissa shows an increasing compression in terms of an incremental length of time $\Delta t$ per incremental distance $\Delta x$ from the origin, i.e. a scale ratio $s = \Delta t/\Delta x$ that increases monotonically along the abscissa.

The result display according to the invention is advantageously incorporated in a product or vision inspection system as measurement instrument comprising a product or vision inspection device, such as for example a check-weigher, an X-ray scanner, or a metal detector. Such inspection devices are used to determine one or more quantitatively measurable properties of objects, such as for example weight, shape, content and/or foreign matter within such objects.

In preferred embodiments of the invention, the scale markings on the abscissa indicate the length of elapsed time by which a past measurement event is separated from the present point in time. In other words, the scale markings on the abscissa indicate the age of the respective measurement values.

In addition or as an alternative to elapsed time, the scale markings on the abscissa indicate the absolute time and date on which a measurement event occurred, for example 08:40:17, 2016-06-08.

To illustrate the inventive concept of a progressively compressed time scale, for example in a time graph with a width (length of the time axis) of 100 mm and covering a time period of 24 hours, the first millimeter on the abscissa could represent a time interval of one second, while a 1 mm interval in the middle of the time axis (50 mm from the origin of the time axis) could represent a time interval of one minute, and a 1 mm interval at the end of the abscissa (100 mm from the origin of the time axis) could represent a time interval of 1 hour. As mentioned above, a scale ratio $s = \Delta t/\Delta x$ can be defined as the incremental length of time $\Delta t$ (in sec) represented by an incremental distance $\Delta x$ (in mm or other units of length) on the time axis. Thus, the time scale in the foregoing example would have a scale ratio of 1 sec/mm at the beginning of the time axis (i.e. at x=0), 60 sec/mm in the middle (i.e. at x=50 mm), and 3600 sec/mm at the end (i.e. at x=100 mm).

In preferred embodiments of the invention the scale ratio $s = \Delta t/\Delta x$ as defined above increases continuously along the abscissa axis in the direction towards past points in time. For example, the scale ratio $\Delta t/\Delta x$ may increase linearly with the amount of elapsed time according to the function $\Delta t/\Delta x = k \times t$, wherein k represents a proportionality constant. For an infinitesimally small length interval $\Delta x$ the difference quotient $\Delta t/\Delta x$ can be replaced by the differential quotient $dt/dx$. By solving the differential equation $\Delta t/\Delta x = k \times t$, one obtains:

$$\int_{t_0}^{t} \frac{dt}{t} = k \cdot x,$$

and thus

$$k \cdot x = \ln t - \ln t_0 = \ln t/t_0$$

In other words, a scale ratio $\Delta t/\Delta x = k \times t$ that increases linearly with the amount of elapsed time corresponds to a logarithmic scale on the time axis of a time graph. Conversely, t is an exponential function of x:

$$t = t_0 \cdot e^{kx} \text{ and, consequently } s = dt/dx = k \cdot t_0 \cdot e^{kx}.$$

The constants to and k are determined based on the specifications of the raster grid and of the inspection system or measuring instrument in which the inventive display is to be used. Preferably, $t_0$ and k are selected so that:

a) the scale ratio $s = \Delta t/\Delta x \approx \Delta t/\Delta x$ near the origin of the graph (i.e. at $t = t_0$) is small enough so that each new measurement result can be displayed in a raster dot column of its own, i.e. that the new results at the beginning of the time graph are not combined into bins, and

b) the width of the graph, i.e. the distance $x_E$ at the end of the time graph corresponds to a selected past time range $t_p$, e.g. one hour, 8 hours, or 24.

In an alternative embodiment of the invention, the scale ratio $s = \Delta t/\Delta x$ as defined above increases discontinuously in discrete steps along the abscissa axis in the direction towards past points in time. Thus, a time graph would have a first, smallest scale ratio $s_1$ within a first section of the graph from the origin to a first past point in time $t_1$, a second, larger scale ratio $s_2$ within a second section of the graph from the first past point in time $t_1$ to a second, earlier point in time $t_2$, etc., continuing to a largest scale ratio $s_L$ within a last section of the graph at the far end of the abscissa where the oldest measurement values are shown.

A state-of-the-art display panel on which the concept of a continuously updated time graph can be implemented will generally have the form of a pixel raster with an image resolution r specified in dots per inch (dpi). Accordingly, a distance interval $\Delta x_R$ between two raster columns can be expressed as $\Delta x_R = 1/r$. In the practical application of the present invention, it can be advantageous to measure the length x on the abscissa in terms of a number n of pixel intervals $\Delta x_R$ instead of millimeters. In particular the scale ratio s is preferably expressed in seconds per pixel interval. A second determinant factor in the design of a screen display of a time graph according to the invention is the frequency f at which the measurement events follow each other. It is advantageous if the smallest scale ratio $s_{min}$ in the series of continuously or discontinuously increasing scale ratios $s = \Delta t/\Delta x$ is determined as the quotient of the time interval $\Delta T = 1/f$ at which the measurement events follow each other divided by the distance interval $\Delta x = 1/r$ at which the pixel columns of the display raster are spaced apart from each other, in other words $s_{min} = r/f$ [measured in sec/inch], or $s_{min} = 0.03937 \times r/f$ [measured in sec/mm]. For example, if the measurement events follow each other with a frequency of 5/sec or slower and the screen has a resolution of 100 dpi, the time graph should be designed so that the first mm of length on the abscissa corresponds to $0.03937 \times 100/5 \approx 0.8$ sec. If this rule is followed, the part of the time graph closest to the origin allows each individual measurement to be represented by a separate pixel dot column on the graph.

In a time graph of the present invention, as the time scale that is indicated by the scale markings along the abscissa has a variable scale ratio $s = \Delta t/\Delta x$ that increases along the abscissa, there comes a point x along the abscissa where the time interval $\Delta t$ represented by one column width $\Delta x_R$ is longer than the time interval $\Delta T$ between successive measurement events, so that a plurality of measurement events fall within the specific time interval $\Delta t$ corresponding to the pixel column width. In this case, the measurement values falling within the time interval $\Delta t$ associated with said pixel column are combined into an average. As mentioned earlier, this process of grouping successive values in a series is referred to as data binning and belongs to the known state of the art in the design of pixel graphs.

In another embodiment a maximum and a minimum of the measurement values associated with said measurement events are determined, if a plurality of measurement events fall within the specific time interval represented by a pixel column. The maximum and the minimum for said pixel column can be indicated in the graph. The graph can further indicate a moving average, if determined for the the specific time interval represented by a pixel column, and/or lines to indicate a standard deviation of e.g. +/-1 or +/-3 sigma, if applicable or desired by the user.

In any of the embodiments described above, the abscissa as seen by a viewer of the time graph is preferably oriented to the left. This serves to visualize that the times t in the direction of the abscissa from the origin of the graph to the past time $t_p$ at the beginning of the time range lie increasingly in the past. In other words, the time t represents the age of the associated measurement value.

The scope of protection being sought for the present invention further includes any measuring instrument with a result display in the form of a dynamically updating time graph as described hereinabove.

A measuring instrument which can be advantageously equipped with a result display according to the invention is for example a product or vision inspection system.

Examplary product or vision inspection systems comprise at least one product or vision inspection device, such as a check-weigher, an X-ray scanner, or a metal detector. Such inspection systems are used to determine one or more quantitatively measurable properties of an object, such as for example weight, shape, content and/or foreign matter within such an object. Further such inspection systems can comprise a conveyor belt for transporting or moving one or more object through the respective inspection device.

The display graph according to the invention will be described hereinafter through embodiments shown schematically in the drawings, wherein

Figure 1    represents a time graph according to the existing state of the art with a selectively switchable time range of a) 5 minutes, b) 15 minutes, and c) 60 minutes;

Figure 2    represents a first embodiment of a time graph according to the invention with a continuous logarithmic increase in the compression of the time axis scale, showing the graph as it presents itself at a time near the end of its range of 24 hours;

Fig. 3    represents a second embodiment of a time graph according to the invention with a discontinuous, stepwise increase in the compression of the time axis scale; and.

Fig. 4    schematically represents a product or vision inspection system with a display panel showing measurement results in a time graph according to the invention.

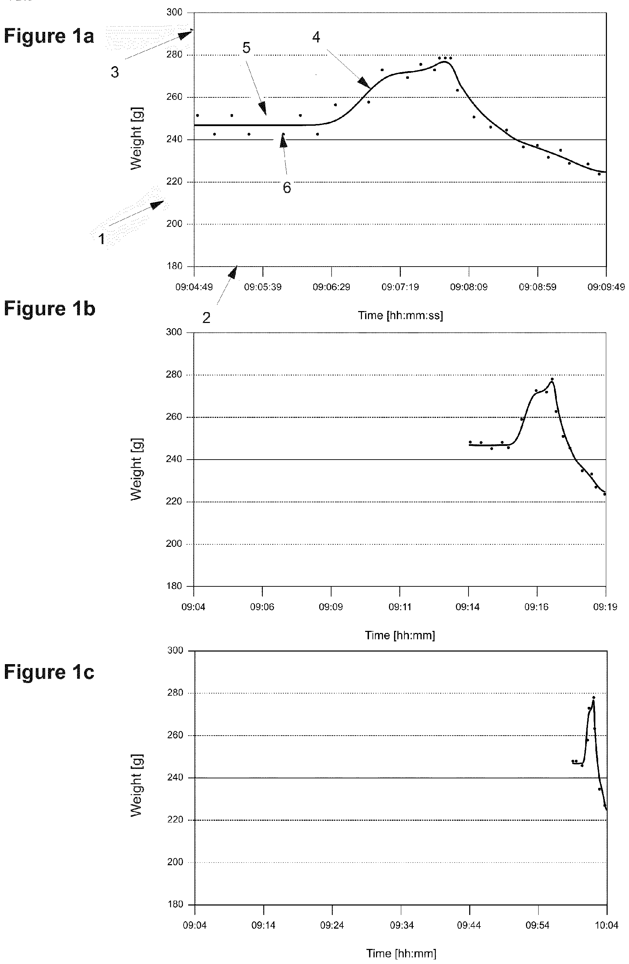

Figure 1 illustrates a time graph 1 according to the existing state of the art with an abscissa 2 covering a selectively switchable time range of a) 5 minutes, b) 15 minutes, and c) 60 minutes, and with an ordinate axis 3 covering a range of measurement values, in this case weight values in a range from 180 grams to 300 grams. The time series of weight values in this example could be generated for example by an in-line check-weighing system with an X-ray device as product or vision inspection device on which articles are weighed while moving on a conveyor belt. Of a series of measurements that was started at 09:03, the graphs show the measurement results up to a current time of 09:10, i.e. over an elapsed time of 7 minutes. Assuming that the measurements follow each other at a rate of 4 per second, the 5-minute time frame of graph a) would cover 1200 measurement values, the 15-minute time frame of graph b) would cover 3600 measurement values, and the 1-hour time frame of graph c) would cover 14,400 measurement values. Further assuming for example that the screen has a resolution of 100 dpi and the graphs a), b) and c) have a width of 100 millimeters (equivalent to approximately 400 pixel column widths), each pixel column in graph a) represents the combined results of 3 measurements, each pixel column in graph b) represents the combined results of 9 measurements, and each pixel column in graph c) represents the combined results of 36 measurements. Each pixel column represents a so-called data bin containing the average, the minimum and the maximum of the combined results. The averages are connected by the solid line 4 in the graph. The individual dots 5, 6 above and below the solid line represent, respectively, the maximum and minimum values of each data bin.

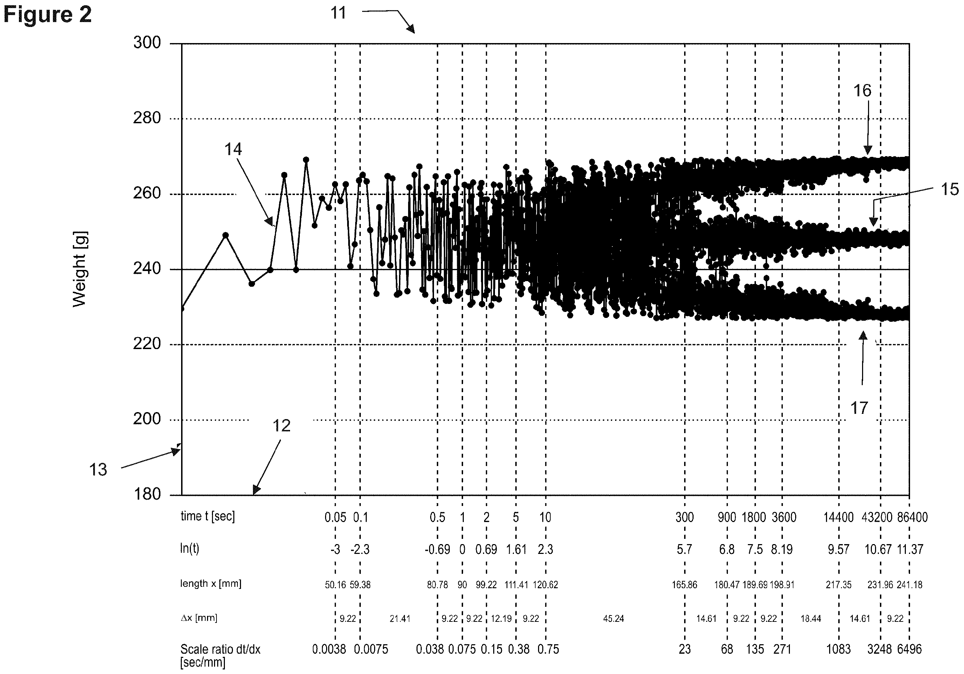

Figure 2 represents a first embodiment of a time graph 11 according to the invention with an abscissa or time axis 12 and an ordinate axis 13. Analogous to Figure 1, the ordinate axis 13 of the time graph 11 in Figure 2 again covers a range of weight values from 180 grams to 300 grams which could be generated for example by a product or vision inspection system comprising an X-ray scanner device in combination with a check-weighing device as product or vision inspection device on which objects are scanned for foreign matter as well as weighed while moving on a conveyor belt. The time markings on the abscissa 12 show a continuous logarithmic increase in the compression of the time scale. Figure 2 represents a snapshot of the graph displaying a measurement series at a time near the end of the 24-hour (86400 sec) range of the time axis 12. In this drawing, the orientation of the time axis 12 is from left to right, but it could also be oriented in the reverse direction in order to visualize that times t in the direction of the abscissa lie increasingly in the past, representing the respective ages of the associated measurement values. The time graph is shown in actual size, i.e. 241 mm wide. The constituent equations for the logarithmic time graph are

$$x = 13.3 \times \ln(t) + 90, \text{ and its inverse } t = 0.001151 \times e^{x/13.3}$$

wherein t is measured in seconds and x is measured in millimeters. Thus, the time of t = 1 sec corresponds to a distance of x = 90 mm from the origin of the graph, while the origin of the graph (x=0), in turn, corresponds to a time t of 0.00115 seconds. As is characteristic of logarithmic graphs, equal multiples of the logarithmically compressed variable (t) correspond to equal length sections ($\Delta x$) of the respective axis. As can be seen in the line "$\Delta x$ (mm)" below the graph, each doubling of t, such as from 0.05 to 1 sec, 0.5 to 1.0 sec, 1.0 to 2 sec, 5.0 to 10 sec, 900 to 1800 sec, 1800 to 3600 sec, and 43200 to 86400 sec always corresponds to a length differential of $\Delta x$ = 9.22 mm on the abscissa 12 of the graph.

The increasing compression of the time scale is demonstrated by the line "Scale ratio dt/dx (sec/mm)": One millimeter length on the abscissa at the origin (x=0) corresponds to 0.0036 sec, a millimeter at t = 1 sec corresponds to 0.075 sec, and so forth, up to a scale ratio of 6496 seconds per millimeter at the end of the time range of 86400 seconds (24 hours).

From the origin to a time of about 3 sec, the graph consists of a single line 14 of individual measurement values, and for times greater than 3 sec the graph has three branches 15, 16 and 17. The explanation for this is that in the section of the graph where t < 3 sec the time interval $\Delta t$ represented by one pixel column width $\Delta x_R$ is shorter than the time interval $\Delta T$ between successive measurement events, so each point on the graph represents an individual measurement. In the section of the graph where t > 3 sec the time interval $\Delta t$ represented by one pixel column width $\Delta x_R$ is longer than the time interval $\Delta T$ between successive measurement events, so that a plurality of measurement events fall within each pixel column width $\Delta x_R$. In this section of the graph the measurement values falling within the time interval $\Delta t$ represented by one pixel column width $\Delta x_R$ are combined into averages, which are represented by the central branch 15 of the graph, while the upper and lower branches 16, 17 represent, respectively, the maxima and minima of the data groups ("data bins") associated with the pixel columns.

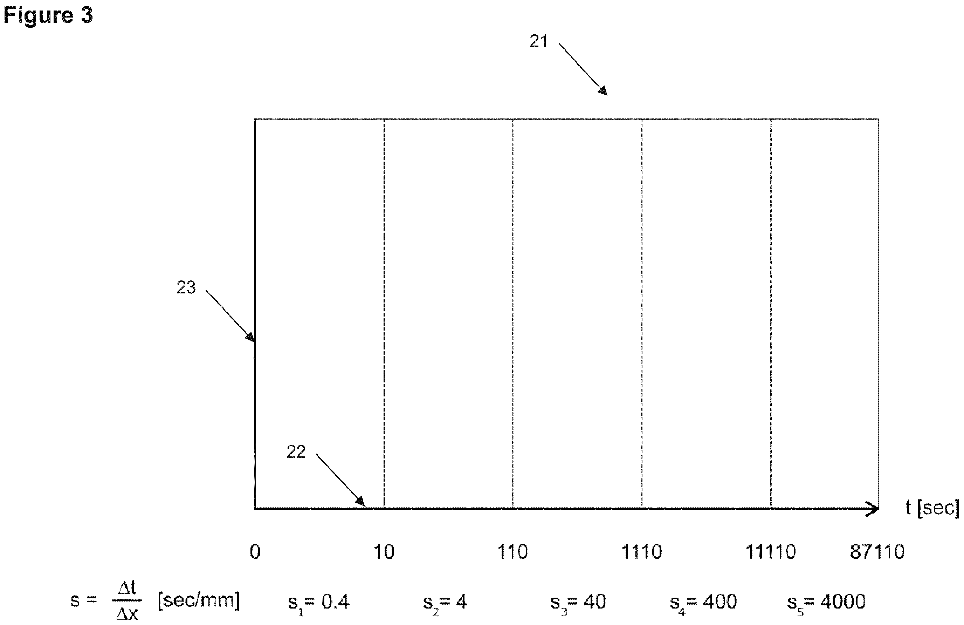

Figure 3 illustrates a second embodiment 21 showing the empty coordinate system (without measurement data) for a time graph according to the invention with an abscissa or time axis 22 and an ordinate 23, wherein the scale ratio s = $\Delta t / \Delta x$ as defined above increases discontinuously in discrete steps along the abscissa 22 in the direction towards past points in time. The time graph 21 in the illustrated example of Figure 3 has a width (length of the time axis) of 119 mm, covers a time period of slightly over 24 hours (87110 sec) and is divided into 5 sections, as follows:

| Section of the abscissa | Constant scale ratio within the section | Time interval covered by the section |
|---|---|---|
| 0 < x < 25mm | $s_1$ = 0.4 sec/mm | 0 < t < 10 sec |
| 25mm < x < 50mm | $s_2$ = 4 sec/mm | 10 < t < 110 sec |
| 50mm < x < 75mm | $s_3$ = 40 sec/mm | 110 < t < 1110 sec |
| 75mm < x < 100mm | $s_4$ = 400 sec/mm | 1110 < t < 11110 sec |
| 100mm < x < 119mm | $s_5$ = 4000 sec/mm | 11110 < t < 87110 sec |

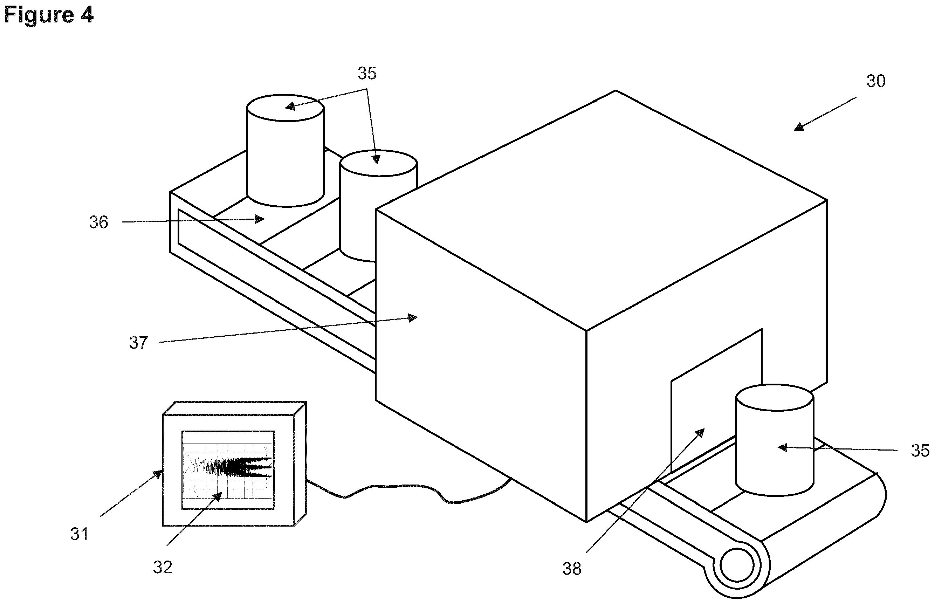

Figure 4 schematically represents a product or vision inspection system with a product or visioninspection device 30 connected to a display panel 31 showing measurement results in a time graph 32 according to the invention. Objects 35 are inspected in regard to a quantitatively measurable property as they move on a conveyor belt 36 through an inspection zone symbolized by a box 37 with an entrance (not visible in the drawing) and an exit 38. For example, the box 37 may represent a state-of-the-art inspection device, such as a inspection device 30, which uses the principle of dual energy X-ray absorptiometry (DEXA) to determine fat, protein, moisture, or chemical lean content and to measure mass as well as detect contaminants in the products moving through the scanner. The measurement result, for example fat content, is presented on the display panel 31 as a continuous live time graph 32 in accordance with the present invention.

While the invention has been described through the presentation of two specific embodiments, it is considered self-evident that numerous additional variants are encompassed by the teachings of the present invention, for example by combining the features of the individual embodiments with each other and/or by exchanging individual functional units of the embodiments against each other. Thus, a time graph according to the invention could for example have a first section with a constant scale ratio $s_1$ analogous to the example of Figure 3, while the rest of the time graph could follow a design analogous to the example of Figure 2 with a continuous logarithmic increase in the compression of the time axis scale. Such combinations of the concepts described and claimed herein fall clearly within the scope of protection that is hereby sought for the present invention.

**List of Reference Symbols**

1       time graph according to the state of the art with selectively switchable time range
2       abscissa, time axis
3       ordinate axis
4       solid line representing respective averages for the values that have been combined into data bins
5       dots representing respective maxima for the values that have been combined into data bins
6       dots representing respective minima for the values that have been combined into data bins
11      time graph according to a first embodiment of the invention
12      abscissa, time axis
13      ordinate axis
14      single solid line representing individual measurements
15      central branch representing respective averages for the values that have been combined into data bins
16      upper branch representing respective maxima for the values that have been combined into data bins
17      lower branch representing respective minima for the values that have been combined into data bins
21      coordinate system for a time graph according to a second embodiment of the invention
22      abscissa, time axis
23      ordinate axis
30      product or vision inspection device
31      display panel
32      time graph according to the invention
35      articles being inspected
36      conveyor belt
37      inspection zone
38      exit from 37

**Claims**

1. Result display on a display panel of a measuring instrument in the form of a dynamically updating time graph (11, 21) with an abscissa (12, 22) carrying scale markings representing points in time, an ordinate axis (13, 23) carrying scale markings representing measurement values acquired through measurement events taking place in the measuring instrument, and an origin at the intersection of the abscissa (12, 22) with the ordinate axis (13, 23), wherein said origin represents a momentary present point in time from which the abscissa axis (12, 22) extends in one direction towards increasingly distant past points in time, wherein the time graph is continuously updated so that the measurement value at the origin represents a momentary and continuously updated present measurement value, while the past measurement values represented by the points on the graph continuously shift their positions along the abscissa (12, 22) in the direction towards increasingly distant past points in time, **characterized in that** a time scale that is represented by the scale markings along the abscissa (12, 22) shows an increasing compression in terms of an incremental length of time $\Delta t$ per incremental distance $\Delta x$ from the origin, wherein a scale ratio $s = \Delta t / \Delta x$ monotonically increases along the abscissa.

2. Result display according to claim 1, wherein the measuring instrument is a product or vision inspection system comprising a product or vision inspection device, such as a check-weigher, an X-ray scanner, or a metal detector.

3. Result display according to claim 1 or 2, **characterized in that** the scale markings on the abscissa (12, 22) indicate an elapsed time length by which a past measurement event is separated from the present point in time.

4. Result display according to claim 1 or 2, **characterized in that** the scale markings on the abscissa (12, 22) indicate an absolute time and date on which a measurement event occurred.

5. Result display according to one of the claims 1 to 4, **characterized in that** the scale ratio $s$ of incremental length of time $\Delta t$ per incremental distance $\Delta x$ increases as a continuous function of the distance $x$ from the origin in the direction towards past points in time.

6. Result display according to claim 5, **characterized in that** the scale ratio s of incremental length of time $\Delta t$ per incremental distance $\Delta x$ increases as an exponential function of the distance $x$ along the abscissa (12, 22) in the direction towards past points in time.

7. Result display according to one of the claims 1 to 4, **characterized in that** the scale ratio s of incremental length of time $\Delta t$ per incremental distance $\Delta x$ increases in discrete steps along the abscissa (12, 22) in the direction towards past points in time.

8. Result display according to one of the claims 1 to 7, wherein the display panel on which the dynamically updating time graph is implemented has the form of a pixel raster with pixel dot rows and columns and with an image resolution r specified in dots per inch (dpi), and wherein further said measurement values acquired through measurement events taking place in the measuring instrument follow each other with a time interval t, **characterized in that** near the origin of the time graph (11, 21), each measurement value is represented in an individual pixel column.

9. Result display according to claim 8, **characterized in that** a minimum scale ratio at the origin of the time graph is $s_{min} = r/f.$

10. Result display according to any one of the preceding claims, **characterized in that**, if a plurality of measurement events fall within the specific time interval represented by a pixel column, the measurement values associated with said measurement events are combined into an average value according to a process of data binning and that the graph indicates the average value for said pixel column.

11. Result display according to claim 10, **characterized in that**, if a plurality of measurement events fall within the specific time interval represented by a pixel column, a maximum and a minimum of the measurement values associated with said measurement events are determined and that the graph further indicates the maximum and the minimum for said pixel column.

12. Result display according to any of the preceding claims, **characterized in that** the abscissa (12, 22) as seen by a viewer of the time graph (11, 21) is oriented to the left.

13. Measuring instrument with a result display in the form of a dynamically updating time graph (11, 21) according to any of the claims 1 to 12.

14. Measuring instrument according to claim 13, wherein the measuring instrument is a product or vision inspection system wherein articles (35) are mechanically moved through an inspection zone (37).

15. Masuring instrument according to claim 14, wherein the product or vision inspection system comprises at least one product or vision inspection device, such as a check-weigher, an X-ray scanner, or a metal detector.

**Figure 1a**

**Figure 1b**

**Figure 1c**

**Figure 3**

EP 3 309 753 A1

# Figure 4

Europäisches
Patentamt

European
Patent Office

Office européen
des brevets

# EUROPEAN SEARCH REPORT

**Application Number**

EP 16 19 3952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2011/261055 A1 (WONG KAREN NATALIE [US] ET AL) 27 October 2011 (2011-10-27)<br>* abstract *<br>* figures 1-3 *<br>* paragraphs [0002], [0016], [0022] - [0024] *<br>----- | 1-6,8-15<br><br>2,7,14, 15 | INV.<br>G06T11/20 |
| X<br><br>Y | US 2011/210974 A1 (BUCK BRIAN J [US]) 1 September 2011 (2011-09-01)<br>* abstract *<br>* figures 2,5,6 *<br>* paragraphs [0002], [0011], [0035] - [0037] *<br>----- | 1,7,13, 15<br>2,7,14, 15 | |
| Y | WO 2012/115819 A1 (3M INNOVATIVE PROPERTIES CO [US]; TARNOWSKI CATHERINE P [US]; BRITTAIN) 30 August 2012 (2012-08-30)<br>* abstract *<br>* figures 2,13 *<br>* claim 9 *<br>* paragraphs [0035], [0101] *<br>----- | 2,14,15 | |
| Y | METTLER TOLEDO Product Inspection: "C3000 System Checkweighers: Adaptability - Performance - Reliability", youtube, 15 August 2014 (2014-08-15), page 2 pp., XP054977046, Retrieved from the Internet: URL:https://www.youtube.com/watch?v=qzXtH8sH86k&feature=youtu.be [retrieved on 2017-01-11]<br>* The video shows at 0:28 minutes a display of a checkweigher with a graph of weight measurements. *<br>----- | 2,14,15 | TECHNICAL FIELDS SEARCHED (IPC)<br><br>G06T<br>G01N<br>G01G |

The present search report has been drawn up for all claims

| Place of search | Date of completion of the search | Examiner |
|---|---|---|
| Munich | 17 January 2017 | Scholz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 3952

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2017

| Patent document cited in search report | | Publication date | Patent family member(s) | | Publication date |
|---|---|---|---|---|---|
| US 2011261055 A1 | | 27-10-2011 | NONE | | |
| US 2011210974 A1 | | 01-09-2011 | US | 7218325 B1 | 15-05-2007 |
| | | | US | 7348981 B1 | 25-03-2008 |
| | | | US | 2008129735 A1 | 05-06-2008 |
| | | | US | 2010039432 A1 | 18-02-2010 |
| | | | US | 2011210974 A1 | 01-09-2011 |
| WO 2012115819 A1 | | 30-08-2012 | BR | 112013020467 A2 | 25-10-2016 |
| | | | CN | 103392125 A | 13-11-2013 |
| | | | EP | 2678665 A1 | 01-01-2014 |
| | | | JP | 2014511530 A | 15-05-2014 |
| | | | KR | 20140031201 A | 12-03-2014 |
| | | | SG | 192768 A1 | 30-09-2013 |
| | | | US | 2013322733 A1 | 05-12-2013 |
| | | | WO | 2012115819 A1 | 30-08-2012 |

EPO FORM P0459

For more details about this annex : see Official Journal of the European Patent Office, No. 12/82